# EUROPÄISCHE PATENTSCHRIFT

(11) **EP 2 527 694 B1**
(45) Veröffentlichungstag und Bekanntmachung des Hinweises auf die Patenterteilung: **09.10.2013**
(21) Anmeldenummer: 11009979.3
(22) Anmeldetag: 19.12.2011
(51) Int. Cl.: F16J 15/06, F16J 15/32, F16C 33/78

(54) **Maul- oder klauenförmige Spaltdichtung**
Jaw or claw shaped gap seal
Joint fendu en forme de griffe ou de mâchoire

(43) Veröffentlichungstag der Anmeldung: 28.11.2012
(73) Patentinhaber: IMO Holding GmbH, 91350 Gremsdorf (DE)
(72) Erfinder: Troeger, Florian, 91301 Forscheim (DE); Willaczek, Hermann, 91334 Hemhofen (DE)

(56) Entgegenhaltungen:
- DE-U1- 20 203 372
- DE-U1-202008 017 335

## Beschreibung

Die Erfindung betrifft eine Spaltdichtung zur Abdichtung eines zwischen gegeneinander verdrehbaren Körpern vorhandenen Lagerspaltes, insbesondere zur Abdichtung des Lagerspaltes gegeneinander verdrehbarer Ringe eines Wälzlagers oder einer Drehverbindung, beispielsweise einer Rollen-, Tonnen-, Zylinder-, Nadel-, Kegel-oder Kugeldrehverbindung oder gar eines Kombinationslagers oder gar eines Vierpunktlagers gemäß den Patentansprüchen.

Im Einsatz befindliche Dichtungen für Drehverbindungen, Wälzlager, Großwälzlager und Schwenktriebe sind in Ihrer Form und Ausgestaltung sehr unterschiedlich, obwohl der Anwendungsfall oft sehr ähnlich ist. Die Aufgabenstellung von umlaufenden Dichtungsvorrichtungen für Drehverbindungen und Wälzlager besteht darin, die Drehverbindung oder den Schwenktrieb sicher gegen äußere Einflüsse, beispielsweise Feuchtigkeit, Flugsand oder Verunreinigungen beziehungsweise Schmutz, Fremdkörper, et cetera, zu schützen. Gleichzeitig muss die Dichtung Unterstützung dafür bieten, dass das Schmiermittel im Lager verbleibt beziehungsweise nur in geringen und definierten Mengen aus der Gesamtanordnung gelangt. Sie muss also dem Innendruck des Lagers, herbeigeführt durch das Schmiermittel, in vertretbarem Maße standhalten können. In beiden Fällen spricht der Fachmann von der Abdichtwirkung der Dichtung.

Nach dem Stand der Technik sind handelsübliche und im Einsatz befindliche Dichtungen für Drehverbindungen und Wälzlager vulkanisierbar und bestehen aus elastischen kautschukartigen Werkstoffen, beispielsweise FPM, NBR, ECO, HNBR. Es können neben der Dichtung auch verstärkende und versteifende Elemente, beispielsweise Zugfederstränge, verwendet werden.

Den üblichen Dichtungsanordnungen nach Stand der Technik ist gemein, dass Sie in der Regel entweder einteilig oder mehrteilig ausgeführt sind, das bedeutet aus mindestens einer Dichtungskomponente bestehen. Sehr häufig werden verschiedene ringförmige Dichtungsstränge in die Drehverbindung eingebracht oder in einem oder in mehreren Einstichen beziehungsweise Nuten im Vollmaterial der Drehverbindung oder an dem Schwenktrieb befestigt, sodass sich eine Fixierung stattfindet. Die Fixierung geschieht dabei durch Einbringen des elastischen Dichtungsmateriales in eine im (metallischen) Vollmaterial der abzudichtenden Anordnung vorhandene Nut. Diese Nut wird gelegentlich als Einstichnut oder Formeinstich bezeichnet und ist eine Materialaussparung oder Ausnehmung entsprechend eines nutförmigen Ausnehmungsprofiles im Körper/ Vollmaterial. Zumeist wird diese Nut durch spanende Bearbeitung infolge des sogenannten Einstichdrehens während der Fertigung der Drehverbindung oder des Schwenktriebs erzeugt.

So beschreibt beispielsweise die EP 1920176, basierend auf der DE 102005041720 eine Anordnung zur Abdichtung einer sich drehenden Verbindung, bei der die Dichtungsanordnung aus etwa insgesamt mehr als vier einzelnen Komponenten besteht, die sich jeweils ringförmig erstrecken und in welcher der Dichtungsring an einem der sich drehenden Teile in oben vorgenannter Weise fixiert ist.

Die DE 20203372 hingegen beschreibt unter Anderem eine Dichtungsanordnung für eine Drehlagerung, die aufgrund ihrer stark asymmetrischen Geometrie in Verbindung mit einem zusätzlichen Ringelement aus einem anderen Werkstoff eine gute Dichtungswirkung erreicht. Auch hier ist die stark asymmetrische Geometrie des Dichtungsprofils an einem der sich drehenden Teile in oben vorgenannter Weise fixiert. Die DE 102006053832 beschäftigt sich mit dem Einsatz einer Anordnung zum Abdichten zweier gegeneinander verdrehbar Teile, die als zusätzliche Komponente eine Feder beziehungsweise ein Zugfederband verwendet, und in welcher der Dichtungsring an einem der sich drehenden Teile in oben vorgenannter Weise fixiert ist.

Diesen herkömmlichen Dichtungsgeometrien ist gemein, dass die Art der Fixierung sehr großen Einfluss hat auf die Abdichtwirkung der Dichtung hat. Häufig wird beobachtet, dass Dichtungen während des Betriebs, insbesondere nach längerer Betriebsdauer aus der Fixierung herausrutschen und somit ihrem Existenzzweck nicht mehr gerecht wird. Je besser die Fixierung der Dichtung oder Dichtungsanordnung wäre, desto geringer wäre die Chance des ungewünschten Verlusts der Dichtung.

Aus diesem genannten Problem ergibt sich die die Erfindung initiierende Aufgabe, eine Dichtungsgeometrie zur Spaltabdichtung mit möglichst einfachem Profil zu schaffen, welche sehr gut fixiert werden kann, gleichzeitig jedoch einfach am Wälzlager- oder Drehverbindungsprodukt oder Dichtungsspalt anzubringen ist, und dennoch gute Abdichtwirkung erzielt. Die Spaltdichtung soll ferner ideal als Retrofit-Dichtung geeignet sein. Die Lösung gelingt insbesondere mit der erfindungsgemäßen Spaltdichtung gemäß der weiteren Beschreibung und gemäß den weiter unten beschriebenen Ansprüchen.

Erfindungsgemäß weist die Spaltdichtung verhältnismäßig einfache Geometrie auf und ist einteilig, da im Retrofit-Falle aufwändige, insbesondere mehrteilige, Dichtungskomplexe nur unter erhöhtem Montageaufwand montiert werden können. Eine zweilippige Spaltdichtung genügt diesem Zwecke, eine drei- oder mehrlippige Spaltdichtung bringt weitere Vorteile. In einer weiteren vorteilhaften Ausgestaltung der Erfindung können daher mehr als zwei Dichtlippen Anwendung finden.

Die erfindungsgemäße Spaltdichtung zur Abdichtung eines zwischen gegeneinander verdrehbaren Körpern vorhandenen Lagerspaltes, insbesondere zur Abdichtung des Lagerspaltes gegeneinander verdrehbarer Ringe eines Wälzlagers oder einer Drehverbindung, beispielsweise einer Rollen-, Tonnen-, Zylinder-, Nadel-, Kegel- oder Kugeldrehverbindung oder gar eines Kombinationslagers oder gar eines Vierpunktlagers, weist mindestens zwei einen zweiten Körper zumindest punktweise, vorzugsweise jedoch flächig, berührenden Dichtlippen auf, welche selbst wiederum je mindestens eine Dichtungsmaulseite oder mindestens je einen Dichtungsklauenfinger aufweist. Dabei erstrecken sich die mindestens zwei Dichtlippen und deren Dichtungsmaulseiten oder Dichtungsklauenfinger ausgehend vom Dichtungsmittelpunkt in Richtung des zweiten Körpers.

Charakteristisch für diese erfindungsgemäße Spaltdichtung ist, dass mindestens einen in einen ersten Körper nahezu vollständig einsteckbaren Befestigungsansatz zur Fixierung der Spaltdichtung an dem ersten Körper gegeben ist, insbesondere zur mindestens formschlüssigen Befestigung durch Einstecken in eine langgestreckte Ausnehmung oder Einstichnut im ersten Körper, beispielsweise mit entlang der Einstichnut eingebrachten Querschnittsverbreiterungen oder Widerhaken. Ferner ist gegeben mindestens einen an des ersten Körpers Oberfläche anschmiegbaren Dichtungsfortsatz, insbesondere welcher leicht geneigt ist gegenüber des ersten Körpers Oberfläche, insbesondere welcher sich federnd an diese Oberfläche anschmiegt. Ebenso ist durch die Erfindung gegeben ein im Profil der Spaltdichtung liegender Dichtungsmittelpunkt an der Kreuzungsstelle zweier sich durch die Dichtung erstreckender Hauptachsen.

Als insbesondere vorteilhaft stellt sich heraus, wenn die Dichtungsanordnung über eine ausgewogene Geometrie verfügt, welche einen festen Sitz und somit gute Fixierung möglichst nahe am (Dreh-)körper ermöglicht. Demzufolge ist die Lage dieses Dichtungsmittelpunktes von insbesonderer Wichtigkeit.

Die erfindungsgemäße Spaltdichtung verfügt über einen in einen ersten Körper nahezu vollständig einsteckbaren Befestigungsansatz zur Fixierung der Spaltdichtung an diesem ersten Körper, insbesondere Drehkörper.

Durch Zusammendrücken der Spaltdichtung und eindrücken oder einpressen in den Einstich oder in die Nut beziehungsweise in die Materialausnehmung/ Aussparung im ersten Körper wird die Dichtung dort fixiert. Mit entlang dem Ausnehmungsprofil oder dem Einstich eingebrachten Querschnittsverbreiterungen oder Widerhaken wird die Spaltdichtung gegen leichtes Wiederherausziehen gesichert.

Ferner weist die erfindungsgemäße Spaltdichtung einen an des ersten Körpers Oberfläche anschmiegbaren Dichtungsfortsatz auf, welcher beispielsweise leicht geneigt ist gegenüber des ersten Körpers Oberfläche, und welcher sich sich federnd an die Oberfläche dieses ersten Körpers anschmiegt oder anlegen kann.

Dieser erste Körper ist dabei beispielsweise der Innenring oder der Außenring eines Großwälzlagers oder einer Drehverbindung - oder gar eines Schwenktriebs. Ein zweiter Körper ist der dazu jeweils gegen gelagerte Wälzlagerring.

Ferner verfügt die Erfindung über mindestens zwei diesen zweiten Körper berührende Dichtlippen. Diese Dichtlippen berühren, zumindest punktweise, vorzugsweise jedoch flächig, mit mindestens je einer Dichtungsmaulseite oder mindestens je einem Dichtungsklauenfinger diesen zweiten Körper, und zwar jeweils an dessen Oberfläche. Vorteilhaft im Sinne der Erfindung ist, wenn dabei mindestens eine Dichtungsmaulseite oder mindestens ein Dichtungsklauenfinger einer Dichtlippe, zumindest teilweise, in den Dichtungsspalt hineinragt, während die mindestens eine andere Dichtungslippe den Stoßbereich von der anderen Seite umgreift.

Es erstrecken sich also mindestens zwei, gegebenenfalls auch drei oder mehr, Dichtungsmaulseiten oder Dichtungsklauenfinger vom ersten Körper ausgehend in Richtung des zweiten Körpers, und zwar aus der Richtung des Dichtungsmittelpunktes ausgehend.

Dieser Dichtungsmittelpunkt liegt dabei an der nahezu rechtwinkligen Kreuzungsstelle beider gedachter Achsen liegt, welche zum Einen den Befestigungsansatz in dessen horizontaler Erstreckung teilt, vorzugsweise etwa hälftig, beispielsweise symmetrisch, und zum Anderen den Dichtungsfortsatz in dessen vertikaler Erstreckung teilt, vorzugsweise ebenfalls etwa hälftig.

Die erfindungsgemäße Spaltdichtung zur Abdichtung eines zwischen gegeneinander ist also unter Anderem gekennzeichnet dadurch, dass sich Dichtlippen von Fuß oder Kehle des Dichtungsmauls ausgehend, insbesondere etwa maul- oder klauenartig, an mindestens zwei korrespondierende Flächen des zweiten Körpers anlegen oder anschmiegen, insbesondere jeweils federnd oder elastisch an diese Flächen anlegen oder anschmiegen.

Das Umgreifen des Stoßes erfolgt also in der Art, wie ein Maul den aufzunehmenden Teil eines anderen Körper umfasst. Alternativ kann man sich vorstellen, dass die beiden Dichtlippen, insbesondere deren Spitzen oder Finger/ Klauen, den aufzunehmenden Teil eines korrespondierenden Körpers umgreifen.

Vergleicht man Urzustand, also die erfindungsgemäße Dichtung im nicht verbauten Zustand, und Einbausituation, etwa beispielsweise als Retrofit-Dichtung in der zu überholenden Anlage, also die erfindungsgemäße Dichtung im verbauten Zustand, so wird offenbart, dass der direkte Abstand zwischen den Spitzen der Finger/ Klauen, also die Berührpunkte der Dichtungsmaul- oder Dichtungsklauenfinger am zweiten Körper, einen jeweils anderen Betrag und auch andere Richtung aufweist: In Einbausituation wird dieser Abstand einen höheren Betrag und eine stärker im Uhrzeigersinn gedrehte Richtung einnehmen als im nicht verbauten/ nicht montierten (Ur-)zustand.

Ebenfalls charakteristisch für die Erfindung ist, dass die Kehle des Dichtungsmauls oder der Dichtungsklaue ausgehend vom Dichtungsmittelpunkt unter einem Winkel zwischen 0° und 90° gegenüber der horizontalen Achse angeordnet ist. Besonders vorteilhaft erweisen sich Winkel von vorzugsweise zwischen 40° und 60°, oder genauer, zwischen etwa 45° und 50°.

Hinsichtlich der ausgewogenen Geometrie und dem festen Sitz der erfindungsgemäßen Spaltdichtung stellt sich eine nahe und gute Fixierung am Körper als vorteilhaft heraus. Beispielsweise wird dies gewährleistet, wenn die gedachte Verlängerung der Achse von Dichtungsmittelpunkt aus und durch die Kehle des Dichtungsmauls/ der Dichtungsklaue direkt auf den Stoß der beiden korrespondierende Flächen des zweiten Körpers trifft.

In einer weiteren Ausführungsform werden drei oder mehr Dichtlippen mit drei oder mehr Dichtungsklauenfinger eingesetzt, wodurch die ideale Dichtungswirkung mittels Zusammenspiel aller beteiligten Dichtlippen und deren Dichtungsklauenfinger zustande kommt.

Weitere Vorteile und Ausgestaltungsmöglichkeiten ergeben sich in erfindungsgemäßen Weiterführungen der Erfindung sowie aus den beispielhaft angefügten Zeichnungen. Dabei zeigen sämtliche Zeichnungen das geschnittene Dichtungsprofil, als:
Fig. 1 eine Ausführungsform einer erfindungsgemäßen Spaltdichtung mit zwei Dichtlippen im Urzustand, also in nicht montierter/ nicht verbauter Lage, mit einem nicht gedehnten Dichtungsmaul.
Fig. 2 die gleiche Ausführungsform wie Fig. 1 einer erfindungsgemäßen Spaltdichtung mit zwei Dichtlippen, jedoch im eingebauten Zustand, also im montierter Lage, mit einem gedehnten Dichtungsmaul oder einer geöffneten Dichtungsklaue.
Fig. 3 eine weitere Ausführungsform einer erfindungsgemäßen Spaltdichtung mit drei Dichtlippen in nicht montierter/ nicht verbauter Lage, mit einem nicht gedehnten Dichtungsmaul.
Fig. 4 die gleiche Ausführungsform wie Fig.3 mit drei Dichtlippen im eingebauten Zustand, also im montierter Lage, mit einem gedehnten Dichtungsmaul oder einer geöffneten Dichtungsklaue.

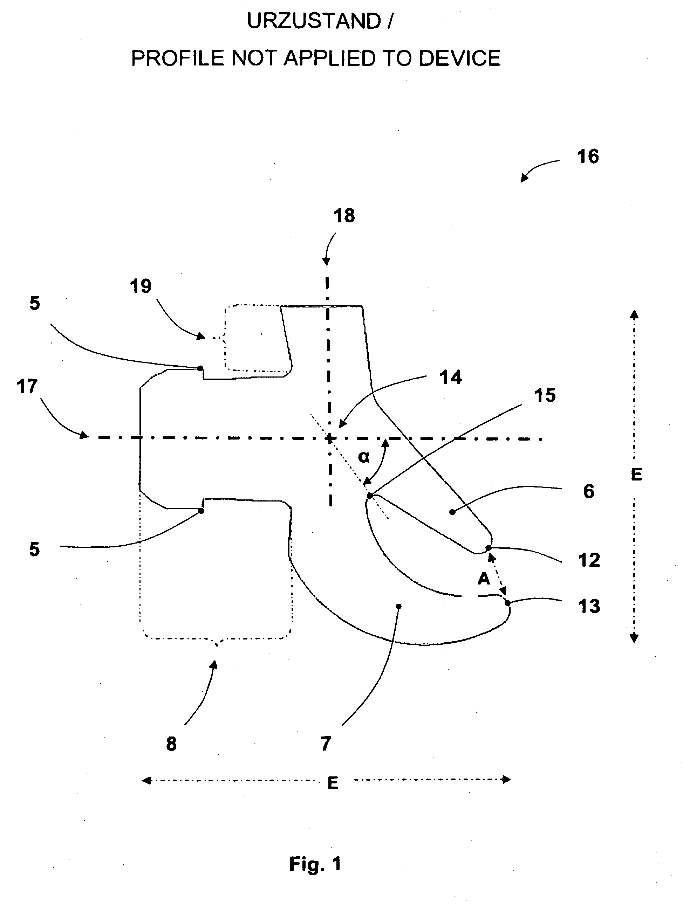

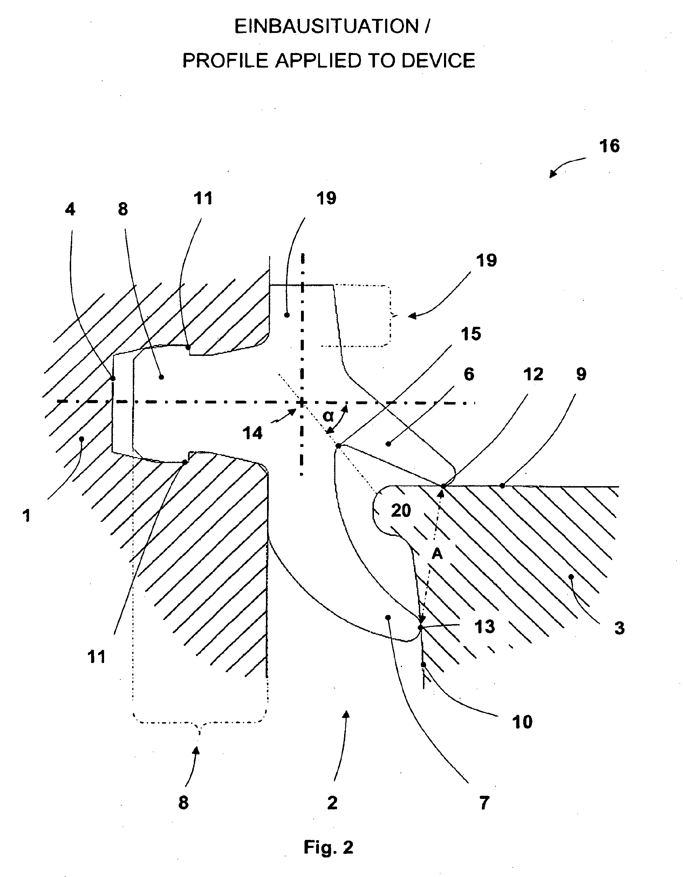

Fig. 1 sowie Fig. 2 weisen je dieselbe Spaltdichtung (16) auf mit vertikal nach oben orientiertem Dichtungsfortsatz (19), ebenso mit horizontal nach rechts orientiertem Befestigungsansatz (8). Die Dichtungswirkung oder Abdichtwirkung wird durch eine obere Dichtlippe (6) beispielsweise die auslassende Dichtlippe (6) in Verbindung mit einer unteren Dichtlippe (7) welche als sperrende Dichtlippe (7) wirkt, hergestellt. Zweck der Anordnung ist die Abdichtung eines Lagerspaltes (2).
Im Betrieb werden beide Dichtlippen (6 ; 7) an den zweiten Körper (3), etwa den Innenring eines Wälzlagers, angelegt oder angeschmiegt. Die Berührungspunkte der Dichtlippen (6 ; 7) mit diesem zweiten Körper sind deren Spitzen, genannt obere und untere Dichtungsmaulseiten (12 ; 13) oder oberer und unterer Dichtungsklauenfinger (12 ; 13).

Diese Dichtungsmaulseiten (12 ; 13) beziehungsweise Dichtungsklauenfinger (12 ; 13) nach Fig. 1 sowie Fig. 2 liegen zum Einen an der ersten Fläche (9) an, und zum Anderen an der zweiten Fläche des zweiten Körpers (10). Die beiden Flächen des zweiten Körpers treffen im Stoßbereich (20) beider Flächen aufeinander. Der Stoßbereich (20) liegt in der Regel im oder nahe des Dichtungsspaltes (2), sodass die beiden Dichtungsklauenfinger (12 ; 13) ebenfalls in der Nähe des Dichtungsspaltes jeweils den zweiten Körper (3) berühren oder daran anliegen.
Die Spaltdichtung (16) ist im Abbildungsbeispiel ferner charakterisiert dadurch, dass der Dichtungsmaulkehle oder Dichtungsklauenfuß (15) dieser Dichtung (16) auf einer gedachten geraden Linie zwischen dem Stoßbereich (20) und dem Dichtungsmittelpunkt (14) liegt. Dadurch schliesst dieser Dichtungsklauenfuß (15) mit dem Dichtungsmittelpunkt (14) und der horizontalen Achse (17) einen Winkel (α) ein. Im vorliegender Abbildung etwa 55°.

Fixiert werden kann die Spaltdichtung (16) nach Fig. 1 sowie Fig. 2 am ersten Körper (1), beispielsweise dem Außenring eines Wälzlagers, mittels Einstecken des Befestigungsansatzes (8) in eine Einstichnut/ Formeinstich als Materialaussparung (4) oder in eine dementsprechende Ausnehmung oder Ausnehmungsprofil (4). Der Vorteil in der Fixierweise bietet sich durch zusätzliche Querschnittsverbreiterung oder Widerhaken (5) im Dichtungsmaterial, welche in dafür vorgesehene Aussparungen in Einstichnut/ Formeinstich (4), welche als Widerhakenansatz oder Widerhakenwiderlager im Drehkörper zu verstehen sind, eingepasst werden. Durch diese Querschnittsverbreiterung oder Widerhaken (5) wird die Spaltdichtung (16) zusätzlich gegen Wiederherausziehen gesichert dergestalt, dass die Querschnittsverbreiterungen des Dichtungsmateriales im Einstich (4) beim Herausziehen gegen den Widerhakenansatz (11) im Körper (Drehkörper) gepresst werden. Das Dichtungsmaterial wird also am Ansatz (11) Richtung der horizontalen gestaucht. Somit wirkt der Widerhakenansatz dem Herausziehen in horizontaler Richtung entgegen.

Ferner in Fig. 1 sowie Fig. 2 ersichtlich ist, dass die Dichtung (16) weist einen Mittel punkt (14) auf, in dem sich horizontale Achse (17) und vertikale Achse (18) in etwa schneiden. Diese Achsen liegen dabei jeweils mittig im Befestigungsansatz (8) be ziehungsweise im Dichtungsfortsatz (19).

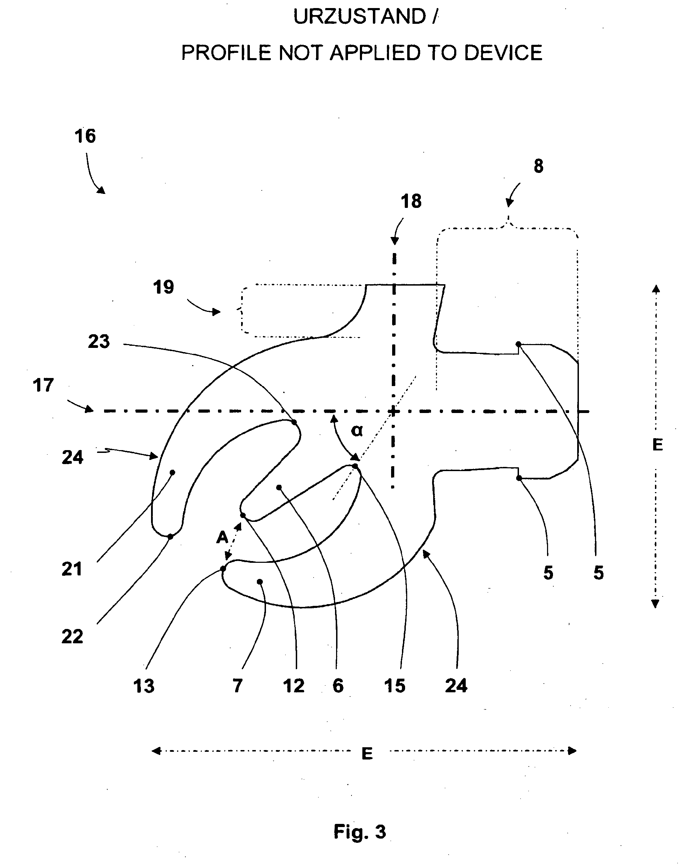

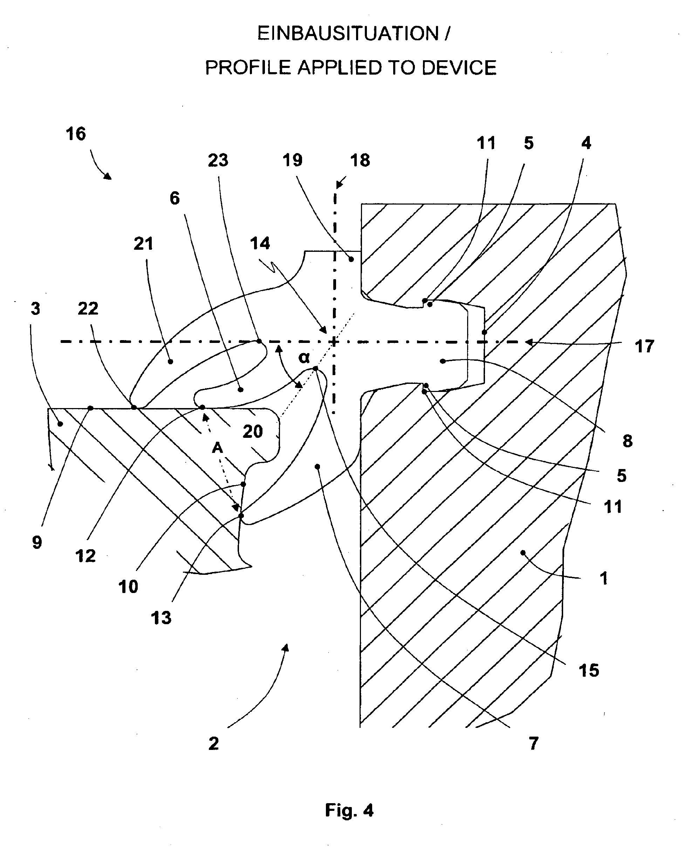

Fig. 3 und Fig. 4 zeigen die Ausführung einer erfindungsgemäßen Spaltdichtung (16) mit drei Dichtlippen (6 ; 7 ; 21). Grundsätzlich ergibt sich die gleiche Funktionsweise wie bei Fig. 1 und Fig. 2. Beispielhaft gezeigt ist auch hier je dieselbe Spaltdichtung (16) auf mit vertikal nach oben orientiertem Dichtungsfortsatz (19), ebenso mit horizontal nach links orientiertem Befestigungsansatz (8). Die Dichtungswirkung oder Abdichtwirkung wird durch eine mittige Dichtlippe (6) beispielsweise ebenfalls eine auslassende Dichtlippe (6) in Verbindung mit einer unteren Dichtlippe (7) welche als sperrende Dichtlippe (7) wirkt, hergestellt. Zweck der Anordnung ist die Abdichtung eines Lagerspaltes (2). Im Betrieb werden alle drei Dichtlippen (6 ; 7 ; 21) an den zweiten Körper (3) angelegt oder angeschmiegt. Die Berührungspunkte der Dichtlippen (6 ; 7; 21) mit diesem zweiten Körper (3) sind deren Spitzen, bezeichnet als Dichtungsmaulseiten (12 ; 13 ; 22) oder als Dichtungsklauenfinger (12 ; 13 ; 22).

Diese Dichtungsmaulseiten (12 ; 13 ; 22) beziehungsweise Dichtungsklauenfinger (12 ; 13 ; 21) nach Fig. 3 sowie Fig. 4 liegen zum Einen an der ersten Fläche (9) an, und zum Anderen an der zweiten Fläche des zweiten Körpers (10). Die beiden Flächen (9 ; 10) des zweiten Körpers treffen im Stoßbereich (20) beider Flächen aufeinander. Der Stoßbereich (20) liegt auch hier im oder nahe des Dichtungsspaltes (2). Die Spaltdichtung (16) ist auch in diesen Abbildungen ferner charakterisiert dadurch, dass die Kehle (15) auf einer gedachten geraden Linie zwischen dem Stoßbereich (20) und dem Dichtungsmittelpunkt (14) liegt. Dadurch schliesst dieser Dichtungsklauenfuß (15) mit dem Dichtungsmittelpunkt (14) und der horizontalen Achse (17) einen Winkel (α) ein. Da drei Dichtlippen (6 ; 7 ; 21) vorhanden sind, ergibt sich ein Dichtungsmaul- oder Dichtungsklauenfuß (23), welcher die Senke zwischen den beiden dem Spalt (2) am entferntest gelegenen Dichtlippen (6 ; 21) bildet.

### Bezugszeichenliste:

- (1): Erster verdrehbarer Körper (Drehkörper), z.B.: Wälzlagerring
- (2): Lagerspalt
- (3): Zweite verdrehbarer Körper (Drehkörper), z.B.: Wälzlagerring
- (4): Einstichnut/ Formeinstich als Materialaussparung oder Ausnehmung oder Ausnehmungsprofil
- (5): Querschnittsverbreiterung oder Widerhaken
- (6): Dichtlippe, z.B.: als auslassende Dichtlippe
- (7): Dichtlippe, z.B.: als sperrende Dichtlippe
- (8): Befestigungsansatz
- (9): Erste Fläche des zweiten Körpers
- (10): Zweite Fläche des zweiten Körpers
- (11): Widerhakenansatz im Körper (Drehkörper)
- (12): Dichtungsmaulseite oder Dichtungsklauenfinger
- (13): Dichtungsmaulseite oder Dichtungsklauenfinger
- (14): Dichtungsmittelpunkt
- (15): Dichtungsmaul- oder Dichtungsklauenkehle
- (16): Spaltdichtung
- (17): horizontale Achse
- (18): vertikale Achse
- (19): Dichtungsfortsatz
- (20): Stoß
- (21): Dichtlippe
- (22): weiterer Dichtungsmaulseite oder Dichtungsklauenfinger
- (23): Dichtungsmaul- oder Dichtungsklauenfuß
- (24): gerundete Außenkontur
- (E): Erstreckung
- (A): direkter Abstand
- (α): Winkel

## Patentansprüche

1. Spaltdichtung (16) zur Abdichtung eines zwischen gegeneinander verdrehbaren Körpern (1 ; 3) vorhandenen Lagerspaltes (2), insbesondere zur Abdichtung des Lagerspaltes (2) gegeneinander verdrehbarer Ringe eines Wälzlagers oder einer Drehverbindung, beispielsweise einer Rollen-, Tonnen-, Zylinder-, Nadel-, Kegel- oder Kugeldrehverbindung oder gar eines Kombinationslagers oder gar eines Vierpunktlagers, mit mindestens zwei einen zweiten Körper (3) zumindest punktweise, vorzugsweise jedoch flächig, berührbaren Dichtlippen (6 ; 7 ; 21) welche je mindestens eine Dichtungsmaulseite oder mindestens je einen Dichtungsklauenfinger (12 ; 13 ; 22) aufweisen, wobei sich die mindestens zwei Dichtlippen (6 ; 7 ; 21) und deren Dichtungsmaulseiten oder Dichtungsklauenfinger (12 ; 13 ; 22) ausgehend vom Dichtungsmittelpunkt (14) in Einbausituation in Richtung des zweiten Körpers erstrecken, wobei
- a) mindestens einen in einen ersten Körper (1) nahezu vollständig einsteckbaren Befestigungsansatz (8) zur Fixierung der Spaltdichtung (16) an dem ersten Körper (1), insbesondere zur mindestens formschlüssigen Befestigung durch Einstecken in eine langgestreckte Ausnehmung oder Einstichnut (4) im ersten Körper (1), beispielsweise mit entlang der Einstichnut (4) eingebrachten Querschnittsverbreiterungen (5) oder Widerhaken (5), **gekennzeichnet durch**:
- b) mindestens einen an des ersten Körpers (1) Oberfläche anschmiegbaren Dichtungsfortsatz (19), insbesondere welcher leicht geneigt ist gegenüber des ersten Körpers (1) Oberfläche, insbesondere welcher sich federnd an diese Oberfläche anschmiegt,
- c) einen Dichtungsmittelpunkt (14) an der Kreuzungsstelle zweier sich **durch** die Dichtung erstreckender (Haupt-) Achsen (17 ; 18).

2. Spaltdichtung (16) zur Abdichtung eines zwischen gegeneinander verdrehbaren Körpern (1 ; 3) vorhandenen Lagerspaltes (2) nach Anspruch 1 **gekennzeichnet dadurch, dass**
der Dichtungsmittelpunkt (14) in der nahezu rechtwinkligen Kreuzungsstelle beider (Haupt-) Achsen (17 ; 18) liegt, wobei eine dieser Achsen den Befestigungsansatz (8) in dessen horizontaler Erstreckung teilt, vorzugsweise etwa hälftig, beispielsweise symmetrisch, und die Andere dieser Achsen den Dichtungsfortsatz (19) in dessen vertikaler Erstreckung teilt, vorzugsweise etwa hälftig.

3. Spaltdichtung (16) zur Abdichtung eines zwischen gegeneinander verdrehbaren Körpern (1 ; 3) vorhandenen Lagerspaltes (2) nach nach Anspruch 1 **gekennzeichnet dadurch, dass**
sich Dichtlippen (6 ; 7) von Kehle (15) des Dichtungsmauls ausgehend, insbesondere etwa maul- oder klauenartig, an mindestens zwei korrespondierende Flächen (9 ; 10) des zweiten Körpers anlegen oder anschmiegen, insbesondere jeweils federnd oder elastisch an diese Flächen (9 ; 10) anlegen oder anschmiegen.

4. Spaltdichtung (16) zur Abdichtung eines zwischen gegeneinander verdrehbaren Körpern (1 ; 3) vorhandenen Lagerspaltes (2) nach Anspruch 1 **gekennzeichnet dadurch, dass**
der direkte Abstand (A) zwischen den Berührpunkten der Dichtungsmaul- oder Dichtungsklauenfinger (12 ; 13) am zweiten Körper (2), vergleichend die Einbausituation zum Urzustand, unterschiedlichen Betrag und andere Richtung aufweist.

5. Spaltdichtung (16) zur Abdichtung eines zwischen gegeneinander verdrehbaren Körpern (1 ; 3) vorhandenen Lagerspaltes (2) nach Anspruch 1 **gekennzeichnet dadurch, dass**
die Kehle (15) oder der Fuß (23) des Dichtungsmauls, insbesondere die Kehle (15) der dem Spalt (2) am nähest liegenden Dichtlippe (6 ; 7 ; 21), ausgehend vom Dichtungsmittelpunkt (14) unter einem Winkel (α) zwischen 0° und 90° gegenüber der horizontalen Achse (17) angeordnet ist, vorzugsweise unter einem Winkel zwischen 40° und 60°, insbesondere zwischen etwa 45° und 50°.

6. Spaltdichtung (16) zur Abdichtung eines zwischen gegeneinander verdrehbaren Körpern (1 ; 3) vorhandenen Lagerspaltes (2) nach Anspruch 1 **gekennzeichnet dadurch, dass**
sich Fuß (23) oder die Kehle (15) zwischen auslassender sperrender Dichtlippe (6 ; 7 ; 21) befindet.

7. Spaltrichtung (16) zur Abdichtung eines zwischen gegeneinander verdrehbaren Körpern (1 ; 3) vorhandenen Lagerspaltes (2) nach Anspruch 1 **gekennzeichnet dadurch, dass**
sich die mindestens eine sperrende Dichtlippe (6 ; 7 ; 21) sich im Spalt (2) befindet und/ oder in diesen hineinragt

8. Spaltdichtung (16) zur Abdichtung eines zwischen gegeneinander verdrehbaren Körpern (1 ; 3) vorhandenen Lagerspaltes (2) nach Anspruch 1 **gekennzeichnet dadurch, dass**
sich die mindestens eine auslassende Dichtlippe (6 ; 7 ; 21) den zweiten Körper (3) auf dessen erster Fläche (9), insbesondere der horizontalen Oberfläche, berührt oder an diese Fläche anliegt oder sich an diese Fläche anschmiegt.

9. Spaltdichtung (16) zur Abdichtung eines zwischen gegeneinander verdrehbaren Körpern (1 ; 3) vorhandenen Lagerspaltes (2) nach Anspruch 1 **gekennzeichnet dadurch, dass**
die Verlängerung der Achse von Dichtungsmittelpunkt (14) durch die Kehle (15) des Dichtungsmauls auf den Stoß (20) der beiden korrespondierende Flächen (9 ; 10) des zweiten Körpers trifft.

10. Spaltdichtung (16) zur Abdichtung eines zwischen gegeneinander verdrehbaren Körpern (1 ; 3) vorhandenen Lagerspaltes (2) nach Anspruch 1 **gekennzeichnet dadurch, dass**
den brachten Querschnittsverbreiterungen (5) oder Widerhaken (5) der Spaltdichtung korrespondierende Widerhakenansätze (11) im Körper (1 ; 3) entgegenstehen, wobei die Widerhaken (5) und die Widerhakenansätze (11) formschlüssig zueinander passen.

11. Spaltdichtung (16) zur Abdichtung eines zwischen gegeneinander verdrehbaren Körpern (1 ; 3) vorhandenen Lagerspaltes (2) nach Anspruch 1 **gekennzeichnet dadurch, dass**
die gerundete Außenkontur (24) des gesamten Dichtungsmaules oder der gesamten Dichtungsklaue im Urzustand einen Radius von weniger als 15 mm, vorzugsweise zwischen 4 mm und 10 mm, aufweist.

12. Spaltdichtung (16) zur Abdichtung eines zwischen gegeneinander verdrehbaren Körpern (1 ; 3) vorhandenen Lagerspaltes (2) nach Anspruch 1 **gekennzeichnet dadurch, dass**
die Erstreckung (E) der Spaltdichtung (16) im Urzustand in horizontaler und vertikaler Richtung nur gering unterschiedlichen oder gleichen Betrag annimmt, und vorzugsweise jeweils kleiner als 25 mm ist, beispielsweise in horizontaler Richtung etwa 20 mm aufweist und in vertikaler Richtung etwa 15 mm aufweist.

13. Spaltdichtung (16) zur Abdichtung eines zwischen gegeneinander verdrehbaren Körpern (1 ; 3) vorhandenen Lagerspaltes (2) nach Anspruch 1 **gekennzeichnet dadurch, dass**
der Befestigungsansatz (8) geringeres Maß aufweist als 10 mm, insbesondere etwa 6 mm aufweist.

14. Spaltdichtung (16) zur Abdichtung eines zwischen gegeneinander verdrehbaren Körpern (1 ; 3) vorhandenen Lagerspaltes (2) nach Anspruch 1 **gekennzeichnet dadurch, dass**
der Dichtungsfortsatz (19) geringeres Maß aufweist als 10 mm, insbesondere etwa 3 mm aufweist.

## Claims

1. Gap seal (16) for sealing a bearing gap (2) which is present between bodies (1; 3) that can be rotated with respect to one another, in particular for sealing the bearing gap (2) of rings which can be rotated with respect to one another of an anti-friction bearing or of a rotary connection, for example a roller, barrel, cylinder, needle, tapered or spherical rotary connection or even of a combination bearing or even of a four-point bearing, having at least two sealing lips (6; 7; 21) which can make contact with a second body (3) at least in points but preferably over the full area and which in each case have at least one sealing jaw side or at least in each case one sealing claw finger (12; 13; 22), the at least two sealing lips (6; 7; 21) and their sealing jaw sides or sealing claw fingers (12; 13; 22) extending in the direction of the second body, starting from the seal centre point (14), in the installed situation,
- a) at least one fastening attachment (8) being provided which can be plugged virtually completely into a first body (1) for fixing the gap seal (16) on the first body (1), in particular for at least positively locking fastening by being plugged into an elongate recess or recessed groove (4) in the first body (1), for example having barbs (5) or cross-sectional widened portions (5) which are made along the recessed groove (4),
**characterized by**:
- b) at least one seal projection (19) which can bear tightly against the surface of the first body (1), in particular which is inclined slightly with respect to the surface of the first body (1), in particular which bears tightly against the said surface in a resilient manner,
- c) a seal centre point (14) at the intersection point of two (main) axes (17; 18) which extend through the seal.

2. Gap seal (16) for sealing a bearing gap (2) which is present between bodies (1; 3) which can be rotated with respect to one another according to Claim 1, **characterized in that**
the seal centre point (14) lies at the approximately right-angled intersection point of the two (main) axes (17; 18), one of the said axes dividing the fastening attachment (8) in its horizontal extent, preferably approximately in halves, for example symmetrically, and the other of the said axes dividing the seal projection (19) in its vertical extent, preferably approximately in halves.

3. Gap seal (16) for sealing a bearing gap (2) which is present between bodies (1; 3) which can be rotated with respect to one another according to Claim 1, **characterized in that**,
starting from the throat (15) of the sealing jaw, sealing lips (6; 7) bear or bear tightly against at least two corresponding faces (9; 10) of the second body, in particular approximately in a jaw-like or claw-like manner, in particular in each case bear or bear tightly against the said faces (9; 10) resiliently or elastically.

4. Gap seal (16) for sealing a bearing gap (2) which is present between bodies (1; 3) which can be rotated with respect to one another according to Claim 1, **characterized in that**
the direct spacing (A) between the contact points of the sealing jaw or sealing claw fingers (12; 13) on the second body (2), comparing the installed situation with the original state, has a different magnitude and a different direction.

5. Gap seal (16) for sealing a bearing gap (2) which is present between bodies (1; 3) which can be rotated with respect to one another according to Claim 1, **characterized in that** the throat (15) or the base (23) of the sealing jaw, in particular the throat (15) of the sealing lip (6; 7; 21) which lies closest to the gap (2), starting from the seal centre point (14), is arranged at an angle (α) of between 0° and 90° with respect to the horizontal axis (17), preferably at an angle of between 40° and 60°, in particular between approximately 45° and 50°.

6. Gap seal (16) for sealing a bearing gap (2) which is present between bodies (1; 3) which can be rotated with respect to one another according to Claim 1, **characterized in that**
the base (23) or the throat (15) is situated between the venting and blocking sealing lip (6; 7; 21).

7. Gap seal (16) for sealing a bearing gap (2) which is present between bodies (1; 3) which can be rotated with respect to one another according to Claim 1, **characterized in that**
the at least one blocking sealing lip (6; 7; 21) is situated in the gap (2) and/or protrudes into the latter.

8. Gap seal (16) for sealing a bearing gap (2) which is present between bodies (1; 3) which can be rotated with respect to one another according to Claim 1, **characterized in that**
the at least one venting sealing lip (6; 7; 21) makes contact with the second body (3) on its first face (9), in particular the horizontal surface, or bears against the said face or bears tightly against the said face.

9. Gap seal (16) for sealing a bearing gap (2) which is present between bodies (1; 3) which can be rotated with respect to one another according to Claim 1, **characterized in that**
the extension of the axis of the seal centre point (14) through the throat (15) of the sealing jaw meets the joint (20) of the two corresponding faces (9; 10) of the second body.

10. Gap seal (16) for sealing a bearing gap (2) which is present between bodies (1; 3) which can be rotated with respect to one another according to Claim 1, **characterized in that**
corresponding barb attachments (11) in the body (1; 3) lie opposite the cross-sectional widened portions (5) or barbs (5) of the gap seal which are made, the barbs (5) and the barb attachments (11) fitting one another in a positively locking manner.

11. Gap seal (16) for sealing a bearing gap (2) which is present between bodies (1; 3) which can be rotated with respect to one another according to Claim 1, **characterized in that**,
in the original state, the rounded outer contour (24) of the entire sealing jaw or the entire sealing claw has a radius of less than 15 mm, preferably between 4 mm and 10 mm.

12. Gap seal (16) for sealing a bearing gap (2) which is present between bodies (1; 3) which can be rotated with respect to one another according to Claim 1, **characterized in that**,
in the original state, the extent (E) of the gap seal (16) assumes an only slightly different or identical magnitude in the horizontal and vertical direction, and is preferably in each case smaller than 25 mm, for example is approximately 20 mm in the horizontal direction and approximately 15 mm in the vertical direction.

13. Gap seal (16) for sealing a bearing gap (2) which is present between bodies (1; 3) which can be rotated with respect to one another according to Claim 1, **characterized in that**
the fastening attachment (8) has a smaller size than 10 mm, in particular is approximately 6 mm.

14. Gap seal (16) for sealing a bearing gap (2) which is present between bodies (1; 3) which can be rotated with respect to one another according to Claim 1, **characterized in that**
the seal projection (19) has a smaller size than 10 mm, in particular is approximately 3 mm.

## Revendications

1. Joint d'étanchéité fendu (16) permettant d'assurer l'étanchéité d'une fente de palier (2) présente entre deux corps (1 ; 3) rotatifs l'un par rapport à l'autre, notamment d'assurer l'étanchéité de la fente de palier (2) de bagues rotatives l'une par rapport à l'autre d'un palier à roulement ou d'une liaison rotative, par exemple d'une liaison rotative à rouleaux, à barillets, à cylindres, à aiguilles, à cônes ou à billes, voire d'un palier à roulement mixte ou même d'un palier à quatre points, avec au moins deux lèvres d'étanchéité (6 ; 7 ; 21) susceptibles d'entrer en contact au moins par points, de préférence toutefois à pleine surface avec un deuxième corps (3), lesquelles comportent chacune au moins un côté avec une mâchoire d'étanchéité ou au moins chacune un doigt à griffes d'étanchéité (12 ; 13 ; 22), les au moins deux lèvres d'étanchéité (6 ; 7 ; 21) et leurs côtés avec mâchoire d'étanchéité ou leurs doigts à griffes d'étanchéité (12 ; 13 ; 22) s'étendant en position de montage en direction du deuxième corps, en partant du centre du joint (14),
a) pour la fixation du joint d'étanchéité fendu (16) sur le premier corps (1), au moins un téton de fixation (8) enfichable de manière quasi-totale dans un premier corps (1), notamment pour la fixation au moins par complémentarité de forme par enfichage dans un évidement allongé ou dans une rainure plongeante allongée (4) dans le premier corps (1) étant présent, par exemple avec des évasements de section transversale (5) ou des ardillons (5) ménagés le long de la rainure plongeante (4),
**caractérisé par**
b) au moins un prolongement de joint (19) susceptible d'épouser la surface du premier corps (1), qui est notamment légèrement incliné par rapport à la surface du premier corps (1), notamment qui épouse ladite surface de manière résiliente,
c) un centre du joint (14) à la zone de croisement de deux axes (principaux) (17 ; 18) s'étendant à travers le joint.

2. Joint d'étanchéité fendu (16) permettant d'assurer l'étanchéité d'une fente de palier (2) présente entre deux corps (1 ; 3) rotatifs l'un par rapport à l'autre selon la revendication 1, **caractérisé en ce que** le centre du joint (14) se trouve dans la zone de croisement pratiquement à angle droit des deux axes (principaux) (17 ; 18), l'un desdits axes divisant le téton de fixation (8) dans son extension horizontale, de préférence en à peu près deux moitiés, par exemple de manière symétrique et l'autre desdits axes divisant le prolongement d'étanchéité (19) dans son extension verticale, de préférence en à peu près deux moitiés.

3. Joint d'étanchéité fendu (16) permettant d'assurer l'étanchéité d'une fente de palier (2) présente entre deux corps (1 ; 3) rotatifs l'un par rapport à l'autre selon la revendication 1, **caractérisé en ce qu'**en partant de la gorge (15) de la mâchoire d'étanchéité, des lèvres d'étanchéité (6 ; 7) s'appuient notamment à la manière d'une mâchoire ou d'une griffe sur au moins deux surfaces, (9 ; 10) correspondantes du deuxième corps ou les épousent, en s'appuyant chacune sur lesdites surfaces (9 ; 10) ou en les épousant notamment de manière résiliente ou élastique.

4. Joint d'étanchéité fendu (16) permettant d'assurer l'étanchéité d'une fente de palier (2) présente entre deux corps (1 ; 3) rotatifs l'un par rapport à l'autre selon la revendication 1, **caractérisé en ce que** l'écart direct (A) entre les points de contact du doigt à mâchoire d'étanchéité ou du doigt à griffes d'étanchéité (12 ; 13) sur le deuxième corps (2) est de valeur et de direction différentes, en comparaison de la situation de montage à l'état initial.

5. Joint d'étanchéité fendu (16) permettant d'assurer l'étanchéité d'une fente de palier (2) présente entre deux corps (1 ; 3) rotatifs l'un par rapport à l'autre selon la revendication 1, **caractérisé en ce qu'**en partant du centre du joint (14), la gorge (15) ou le pied (23) de la mâchoire d'étanchéité, notamment la gorge (15) de la lèvre d'étanchéité (6 ; 7 ; 21) la plus proche de la fente (2) est disposée suivant un angle (α) compris entre 0° et 90° par rapport à l'axe horizontal (17), de préférence compris entre 40° et 60°, notamment entre environ 45° et 50°.

6. Joint d'étanchéité fendu (16) permettant d'assurer l'étanchéité d'une fente de palier (2) présente entre deux corps (1 ; 3) rotatifs l'un par rapport à l'autre selon la revendication 1, **caractérisé en ce que** le pied (23) ou la gorge (15) se trouve entre des lèvres d'étanchéité (6 ; 7 ; 21) en souillie et de serrage.

7. Joint d'étanchéité fendu (16) permettant d'assurer l'étanchéité d'une fente de palier (2) présente entre deux corps (1 ; 3) rotatifs l'un par rapport à l'autre selon la revendication 1, **caractérisé en ce que** l'au moins une lèvre d'étanchéité (6 ; 7 ; 21) de serrage se trouve dans la fente (2) et/ou pénètre dans cette dernière.

8. Joint d'étanchéité fendu (16) permettant d'assurer l'étanchéité d'une fente de palier (2) présente entre deux corps (1 ; 3) rotatifs l'un par rapport à l'autre selon la revendication 1, **caractérisé en ce que** l'au moins une lèvre d'étanchéité (6 ; 7 ; 21) en saillie est en contact avec le deuxième corps (3) sur la première surface (9), notamment la surface horizontale de ce dernier ou s'appuie sur ladite surface ou épouse ladite surface.

9. Joint d'étanchéité fendu (16) permettant d'assurer l'étanchéité d'une fente de palier (2) présente entre deux corps (1 ; 3) rotatifs l'un par rapport à l'autre selon la revendication 1, **caractérisé en ce que** le prolongement de l'axe depuis le centre du joint (14) à travers la gorge (15) de la mâchoire d'étanchéité arrive sur l'aboutage (20) entre les deux surfaces (9 ; 10) correspondantes du deuxième corps.

10. Joint d'étanchéité fendu (16) permettant d'assurer l'étanchéité d'une fente de palier (2) présente entre deux corps (1 ; 3) rotatifs l'un par rapport à l'autre selon la revendication 1, **caractérisé en ce qu'**aux évasements de section transversale (5) ou ardillons (5) ménagés du joint d'étanchéité fendu sont opposés dans le corps (1 ; 3) des talons d'ardillons (11) correspondants, les ardillons (5) et les talons d'ardillons (11) s'ajustant par complémentarité de forme.

11. Joint d'étanchéité fendu (16) permettant d'assurer l'étanchéité d'une fente de palier (2) présente entre deux corps (1 ; 3) rotatifs l'un par rapport à l'autre selon la revendication 1, **caractérisé en ce que** le contour extérieur (24) arrondi de l'ensemble de la mâchoire d'étanchéité ou de l'ensemble de la griffe d'étanchéité présente à l'état initial un rayon inférieur à 15 mm, compris de préférence entre 4 mm et 10 mm.

12. Joint d'étanchéité fendu (16) permettant d'assurer l'étanchéité d'une fente de palier (2) présente entre deux corps (1 ; 3) rotatifs l'un par rapport à l'autre selon la revendication 1, **caractérisé en ce que** l'extension (E) en direction horizontale et verticale du joint d'étanchéité fendu (16) à l'état initial adopte une valeur qui n'est que légèrement différente ou identique et est de préférence à chaque fois inférieure à 25 mm, par exemple de 20 mm environ en direction horizontale et de 15 mm environ en direction verticale.

13. Joint d'étanchéité fendu (16) permettant d'assurer l'étanchéité d'une fente de palier (2) présente entre deux corps (1 ; 3) rotatifs l'un par rapport à l'autre selon la revendication 1, **caractérisé en ce que** le téton de fixation (8) présente une dimension inférieure à 10 mm, notamment d'environ 6 mm.

14. Joint d'étanchéité fendu (16) permettant d'assurer l'étanchéité d'une fente de palier (2) présente entre deux corps (1 ; 3) rotatifs l'un par rapport à l'autre selon la revendication 1, **caractérisé en ce que** le prolongement de joint (19) présente une dimension inférieure à 10 mm, notamment d'environ 3 mm.
